# EUROPEAN PATENT APPLICATION

(11) **EP 4 793 040 A1**
(43) Date of publication of application: **19.08.2026**
(21) Application number: 25157673.2
(22) Date of filing: 13.02.2025
(51) Int. Cl.: B32B 17/10

(54) **METHOD FOR DECORATIVE PRINTING AN OBSCURATION AREA OF A WINDSCREEN**

(71) Applicant: Kuraray Europe GmbH, 65795 Hattersheim am Main (DE)
(72) Inventor: Keller, Uwe, 77210 Avon (FR)
(74) Representative: Janßen, Christian Oliver

(57) **Abstract**

The invention is directed to a method to manufacture laminated glazing having at least one decorative obscuration area at an outer area of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration area **characterised in that**
a) a film A' having at least the surface area and shape of film B is provided wherein at least one surface of film A' is entirely provided with the optical properties of the obscuration area
b) printing on the least one surface of film A' with the optical properties of the obscuration area at least in part a coating having different optical properties as the obscuration area
c) cutting film A' at least into the inner shape of the obscuration area thus obtaining film A
d) combining films A and film B into the interlayer film
e) combining two sheets of glass with the thus obtained interlayer film.

## Description

The invention is directed to provide laminated glazing having an obscuration area, preferable an obscuration frame with a decorative print.

### BACKGROUND

Laminated automotive glazing parts such as windshield are typically provided with an obscuration frame to protect sealings or glues necessary to for installation of the windshield in the car body from harmful UV radiation.

Such obscuration frames are usually printed as ceramics on the glass sheet. It is further known to avoid the use of ceramics printed on the glass surface by providing an appropriate black print on the interlayer film of the laminated glazing as proposed for example in WO 2019/121535, WO2019038043A1 or WO2022063962.

As the known obscuration frames have the task to protect sealings or glues from the UV radiation of sunlight, they exclusively appear as black coatings or black dots which is not appealing and/or does not match with the color of the car. Due to the thermal treatment necessary to provide ceramics on a glass sheet, it will be difficult to provide non-black ceramics as obscuration frame. In addition, non-black colors would be insufficient in terms of optical density to ensure a complete UV blocking. Also, high quality multi colour prints are not easily available by ceramic colours compatible with the typical processes of automotive glass manufacturing. On the other hand, overprinting of black ceramic frit is not possible because, either a) before thermal bending of the glass sheet, the black frit is not yet fully cured and still wet or b) after thermal bending, the black frit is fully cured but now printing would need to be done on a curved surface what comes with its own challenges.

It has now been found that providing obscuration frames of laminated glazing is easily obtainable by printing a decorative pattern on top of a black obscuration area on the interlayer film of the laminated glazing.

### OBJECT OF THE INVENTION

Object of the invention is a method to manufacture laminated glazing having at least one decorative obscuration area at an outer area of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration area **characterised in that**
a) a film A' having at least the surface area and shape of film B is provided wherein at least one surface of film A' is entirely provided with the optical properties of the obscuration area
b) printing on the least one surface of film A' with the optical properties of the obscuration area at least in part a coating having different optical properties as the obscuration area
c) cutting film A' at least into the inner shape of the obscuration area thus obtaining film A
d) combining films A and film B into the interlayer film
e) combining two sheets of glass with the thus obtained interlayer film.

The term "obscuration area" refers to one or more regions at one or more of the edges of the laminated glazing provided with limited transmission with a width towards the inner area of the laminated glazing of about 0,5 to 40 cm. The "obscuration areas" may be at one, two three or all four edges of the laminated glazing, depending on the areas behind the laminated glazing needing protection from sun light. The "obscuration areas" may be isolated or combined with each other, but the preferred embodiment is a continuous frame-shaped "obscuration frame" located at all four of the outer edges of the laminated glazing having a width towards the inner area of the laminated glazing of about 0,5 to 40 cm.

The optical properties of the "obscuration area/frame" can be defined as light transmission in the visible spectrum of less than 5%, preferably less than 1%, more preferably less than 0.1% and most preferably less than 0.05%, as measured according to ISO 9050.

In the following, the terms "obscuration areas" and "obscuration frame" are used interchangeable.

With the method of the invention, the obscuration frame can be provided with a decorative printing visible for example to a person standing in front of the car. Insofar, the term "coating having different optical properties as the obscuration frame" may refer to any coating having a different colour than the obscuration frame.

The decorative printing as provided in step b) of the method does preferable not change the light transmission of the obscuration frame. It is preferred that the area of the laminated glazing of the decorative obscuration frame has a light transmission in the visible spectrum of less than 5% as measured according to ISO 9050.

The method of the invention has the advantage over the ceramic print on the glass sheet of avoiding the high temperatures and or the difficulty of printing on convex surfaces or onto a wet layer. Printing on top of a fully black flat PVB film is in contrast easily achievable with standard printing machines, like an ink-jet printer.

Another object of the invention is a laminated glazing comprising two sheets of glass combined with an interlayer film comprising at least one film A containing a polyvinyl acetal PA and at least one film B containing a polyvinyl acetal PB and at least one plasticiser WB, wherein the laminated glazing is provided with at least one decorative obscuration area at least one outer area of the laminated glazing **characterised in that** film A has the shape of the obscuration area and is provided by providing a film A' having at least the surface area and shape of film B with the optical properties of the obscuration area and printing on the least one surface of film A' having the optical properties of the obscuration area at least in part with a coating having different optical properties as the obscuration area.

Preferable, the laminated glazing is obtained by the method of the invention.

### BRIEF DESRIPTION OF THE DRAWINGS

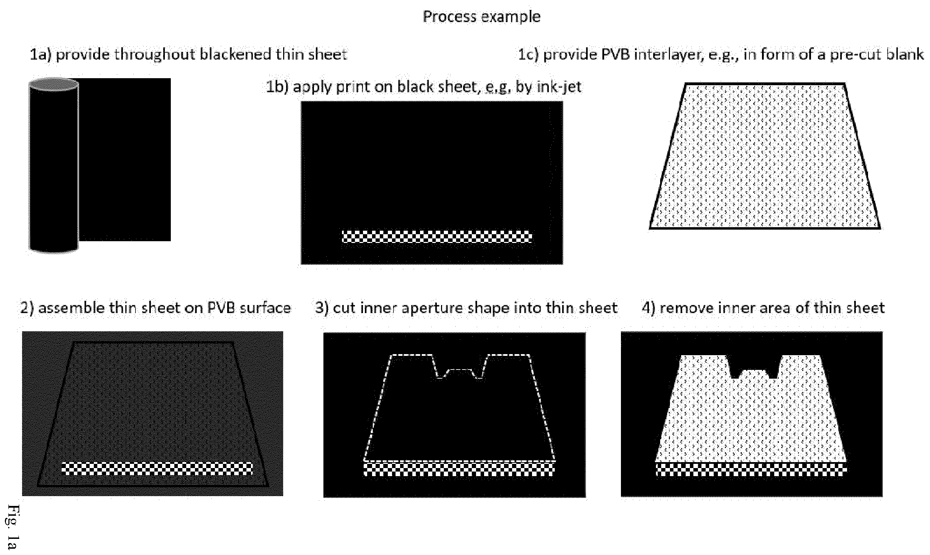

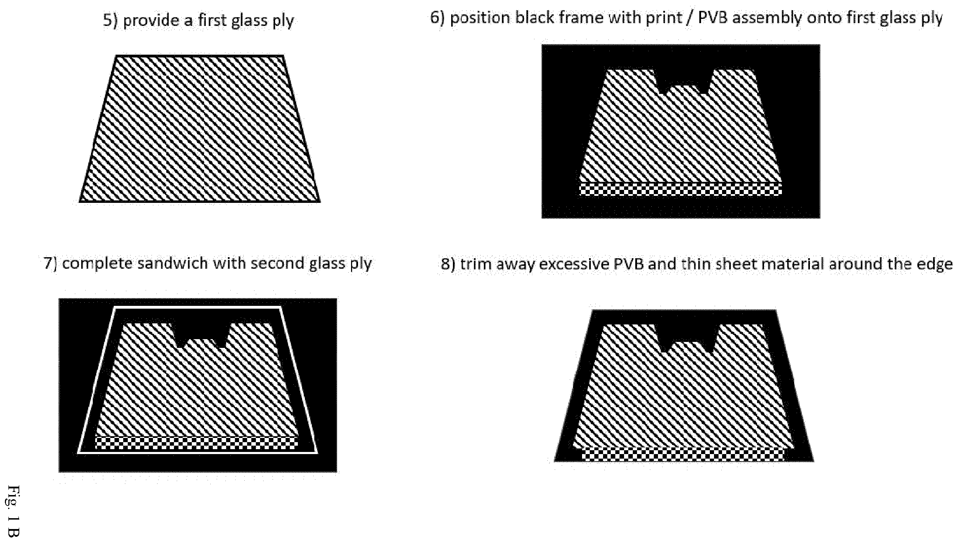

Fig. 1 A and B show the general workflow of the method of the invention.

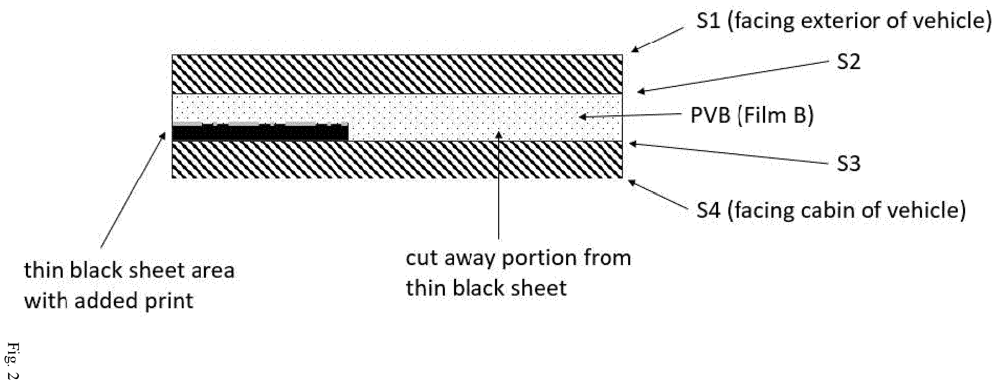

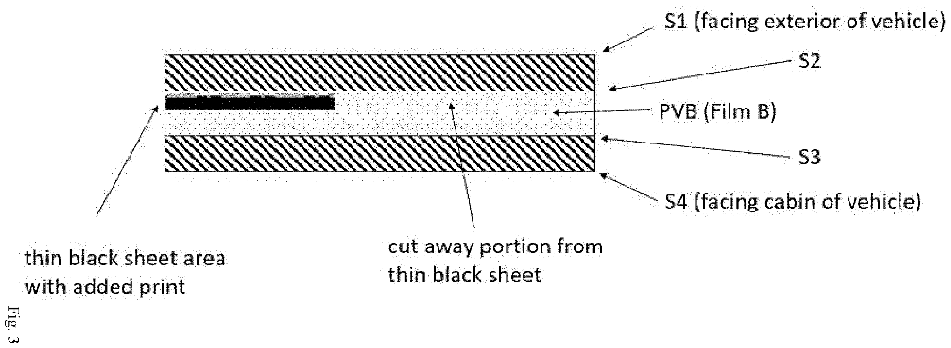

Fig. 2 and 3 show two variants of the laminated glazing produced by the method of the invention as side view.

### DETAILED DESCRIPTION

With the method of the invention, a preferred black obscuration frame is provided at least in part with a coating having different optical properties as the obscuration frame. The term "different optical properties" refers to any other colour -and more than one colour - as the obscuration frame. For example, it is possible to print the obscuration frame with the same or at least matching colour as the car body. Further, the obscuration frame may be provided with more than one colour in a decorative fashion like geometrical patterns or fantastic motives like a waterfall or the logo of one's favourite football club

**In** the method of the invention, a full area blackened thin film (roll, sheet) may be provided in sufficient width and length to cover the entire area of the glass sheets.

Generally, it is preferred that the print is applied to the fully black film prior to the further processing like cutting, prelamination and so forth. By this it is even possible to add in the printing step cutting marks that can be recognized by an automated cutting system to ensure precise alignment between the decorative print with the edges of any cut out area.
A) The black thin film with the decorative print is affixed on the surface of the regular PVB sheet, e.g. by a prelamination step, by interwinding, and so forth. Followed by cutting the aperture area in the black thin film free after combining with the regular PVB, which supports it and helps avoid deformation and wrinkling during the lay-up step.
B) The inner shape of the desired aperture is cut away from the black thin film with the decorative print first. A carrier sheet is used to transfer the residual frame and optionally other areas and affix on the PVB prior lamination. The carrier sheet is removed prior lamination.

In a first embodiment of the method, after step a) and step b), film A' and film B are combined into the interlayer film and then step c) is performed. In this embodiment, Film A' is cut while placed on film B wherein the cut-away areas of film A' are removed.

In a second embodiment, after step a) and step b), step c) is performed and the thus obtained film A' is combined with film B into the interlayer film, which is then combined with the two sheets of glass. In other words, film A is produced independently from film B.

In a variant of this embodiment, a transfer film for example PET, PP in a thickness of 30, 50, 75 or 100 µm is used to ease handling of films A and A'. Here, after step a) and step b), film A' is provided or placed on a transfer film, then step c) is performed; the thus obtained film A' is combined with the transfer film and film B into the interlayer film and wherein the transfer film is removed before combining the two sheets of glass with the interlayer film. Alternatively, after step a), film A' is provided or placed on a transfer film and step b) is performed followed by step c); the thus obtained film A' is combined with the transfer film and film B into the interlayer film and wherein the transfer film is removed before combining the two sheets of glass with the interlayer film

In both embodiments, the transparent aperture for the individual glazing part can be generated by cutting around the desired edge of the outer black band and removing the inner area of the black thin film.

At the same time, features like black ADAS and mirror mount area, including the cut-outs for sensors and cameras can be generated in the same cutting operation. In addition, "islands" of black film, separated from the black frame portion, can be generated, for example to mask a separated mirror mount or rain sensor area. Other features like a window for the vehicle identification number or decorative structures can be produced in the cutting operation. Also certain parts can be entirely removed from the edge to provide an interruption in the frame if desired.

Cutting may be done by blade cutting (like available cutting tables from Zünd), die cutting, laser cutting or stamping. Cutting is preferably done in the form of so called "kiss-cut", by which the black thin film layer is completely cut, but the underlying regular PVB or the carrier sheet is essentially not cut through but superficially cut at the most.

At least one or both surfaces of Film A' and after step c), film A are entirely provided with the optical properties of the obscuration frame. This can be achieved by either by coating or printing and/or by bulk dyeing.

Since the whole surface area of film A/A' can be provided with the optical properties of the obscuration frame, no special printing or coating equipment is necessary. The term "bulk dyeing" refers to a process wherein a mixture of the PVB and the dye (or pigments) is shaped into film A'. Typical shaping processes for PVB and dye mixtures are extrusion casting, solvent casting and film melt blowing.

Providing of at least one surface of film A' with the optical properties of the obscuration frame can be achieved by printing, coating of bulk-dying with any inorganic or organic pigment or colorant which does not dissolve in the polymer matrix and thus resist migration from film A to B. To this end, preferable carbon black, iron oxide black or spinel black can be used as the pigments or colorants for the obscuration frame.

The pigments or colorants may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. The color of the pigments and later on the obscuration frame is not of particular importance and can be any color like white, grey, brown etc.. However, black is preferred. The pigments or colorants can also be combined to give intermediate colors like lighter or darker shades of grey, bluish black, bluish white and so forth.

The print on at least a part of the obscuration frame with a coating having different optical properties as the obscuration frame can be achieved in general with any pigment, colorant or dye having a different colour that the obscuration frame, i.e. preferable with non-black pigments. Preferably the non-black pigments or colorants are selected from the group consisting of titanium dioxide, barium sulfate, aluminium particles, silver particles, chromium particles, azo pigments, quinacridones, diketopyrrolopyrroles, perylenes, phthalocyanines.

These colorants may be dispersed with or without the help of dispersants in a carrier fluid like water, dimethyl formamide, alcohols or mixtures of alcohols and water. Furthermore, binders like polyvinylalcohol, polyvinylbutyral, polyvinylpyrrolidone, polyacrylates, polyurethanes or poly styrene-acrylate may be present. Curable inks can contain monomers, oligomers, crosslinkers, UV activators,

For example, large black areas from the obscuration frame may be overprinted with metallized or white colour to reflect portions of the sunlight and by this reducing the heat load into the vehicle without sacrificing the required UV blocking that is needed to protect the adhesives for mounting of the glazing part onto the car body.

In the step which provides the decorative print, any available inkjet colour can be applied since normally ink layer and ink loading is thin and often these inks are cured, e.g. by UV light, immediately after their application. Such inks are available in colour systems like CYMK, which allow to realize a large number of hues.

For both printing processes, water-based printing inks are preferred over printing inks based on organic solvents since they do not swell or dissolve the film A'/A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing films A and B.

The printing inks can be applied via techniques that are commonly known in the printing industry such as inkjet printing, offset printing, rotogravure printing, flexography, and screenprinting, followed usually by a drying respective curing step. Typically, the dried ink layer thicknesses of 1 - 15 µm, preferably 2 - 12 µm, more preferably 4 - 10 µm and most preferably 5 - 9 µm are sufficient to obtain low enough visible light transmission properties.

In case one or both surfaces of film A' are provided by bulk dying of the whole material of film A', the same dyes or pigments as for the coating/printing process can be used.

In modem cars, various optical detection devices are positioned on the inside of the car behind the windshield. Optical detection devices are chosen from digital cameras, range finders, haze meters, rain sensors, target detectors, scanning laser devices (LIDAR) or related devices using electromagnetic radiation from within the UV/VIS and NIR/IR range of the spectrum. In the context of this invention, the area of the windshield which is used by the optical detection device is denoted "transparent detection area". The term "transparent" shall be understood that the detection area has the same transparency as film B.

Therefore, in another embodiment of the invention the obscuration frame is provided with transparent areas for sensors or cameras and wherein the transparent areas are cut out of film A' in step c).

### Film A

As Film A is produced from Film A' in step c) for example by cutting, the composition of Film A and Film A' is identical. Accordingly, all properties hereinafter disclosed for Film A apply for Film A' likewise.

The thickness of film A' and later on A (both prior to lamination with film B) is 5 - 150 µm, preferably 10 - 100 µm, preferably 15 - 50 µm and most preferably 20 - 35 µm. Film A' and later on Film A can also have at least one textured surface with a surface roughness Rz in a range of 0 - 10 µm, preferably in a range of 1 - 8 µm and most preferably in a range of 2 - 5 µm.

Film A (including its variant with black coated surface) is produced separately from film B (for example extruded or solvent cast) and has either no plasticiser at all or sufficiently small proportion of plasticiser so that subsequent functionalization and processing is not adversely influenced.

Hereinafter, the term "prior to lamination" refers to the state of the films A (A') and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

Films A used in accordance with the invention may contain, in the starting state prior to lamination, less than 15 % by weight, 10 % by weight, less than 8 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A. Film B may also have a wedged thickness profile with a higher thickness for the top or bottom edge of a windshield.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 24 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight. The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate

- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B", which have a different plasticiser content.

In addition, films A and B may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Generally, film A is combined with film B and optionally any other films in the preferred orientation and subsequently, the windshields are produced by a lamination process known in the art. Examples of the lamination process as well as the techniques to apply the obscuration area to film A are also known in the art and can be found inter alia in WO 2019/121535 and WO 2019/038043.

Cutting film A can be performed by any conventional techniques of cutting PVB films, e.g. by cutting with a blade, die or a laser.

## Claims

1. Method to manufacture laminated glazing having at least one decorative obscuration area at an outer area of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration area **characterised in that**
a) a film A' having at least the surface area and shape of film B is provided wherein at least one surface of film A' is entirely provided with the optical properties of the obscuration area
b) printing on the least one surface of film A' with the optical properties of the obscuration area at least in part a coating having different optical properties as the obscuration area
c) cutting film A' at least into the inner shape of the obscuration area thus obtaining film A
d) combining films A and film B into the interlayer film
e) combining two sheets of glass with the thus obtained interlayer film.

2. Method according to claim 1 **characterised in that** optical properties of the obscuration area are provided by printing, coating or dying the film A' with pigments or colorants.

3. Method according to claim 2 **characterised in that** the pigments or colorants are selected from the group consisting of carbon black, iron oxide black, spinel black.

4. Method according to any of claims 1 to 3 **characterised in that** the coating having different optical properties as the obscuration area is printed with non-black pigments.

5. Method according to claim 4 **characterised in that** the non-black pigments are selected from the group consisting of titanium dioxide, barium sulfate, aluminium particles, silver particles, chromium particles, azo pigments, quinacridones, diketopyrrolopyrroles, perylenes, phthalocyanines.

6. Method according to any of claims 1 to 5 **characterised in that** after step a) and step b), film A' and film B are combined into the interlayer film and then step c) is performed.

7. Method according to claim 6 **characterised in that** after step a), film A' is provided on a transfer film, then step b) and step c) are performed; the thus obtained film A' is combined with the transfer film and film B into the interlayer film and wherein the transfer film is removed before combining the two sheets of glass with the interlayer film.

8. Method according to any of claims 1 to 5 **characterised in that** after step a), step b) and step c) is performed, the thus obtained film A is combined with film B into the interlayer film, which is then combined with the two sheets of glass.

9. Method according to any of claims 1 to 8 **characterised in that** at least one surface of film A' is entirely provided with the optical properties of the obscuration area by coating, printing or dying.

10. Method according to any of claims 1 to 9 **characterised in that** the at least one surface of film A' is entirely provided with the optical properties of the obscuration area by bulk dyeing.

11. Method according to any of claims 1 to 10 **characterised in that** step b) is performed by blade cutting, die cutting, laser cutting or stamping.

12. Method according to any of claims 1 to 11 **characterised in that** the obscuration area is provided with transparent areas for sensors or cameras and wherein the transparent areas are cut out of film A' in step c).

13. Method according to any of claims 1 to 12 **characterised in** cutting film A and/or film A' into the outer shape of the laminated glazing.

14. Method according to any of claims 1 to 13 **characterised in that** the area of the laminated glazing of the decorative obscuration area has a light transmission in the visible spectrum of less than 5% as measured according to ISO 9050.

15. Laminated glazing comprising two sheets of glass combined with an interlayer film comprising at least one film A containing a polyvinyl acetal PA and at least one film B containing a polyvinyl acetal PB and at least one plasticiser WB, wherein the laminated glazing is provided with at least one decorative obscuration area at least one outer area of the laminated glazing
**characterised in that**
film A has the shape of the obscuration area and is provided by providing a film A' having at least the surface area and shape of film B with the optical properties of the obscuration area and printing on the least one surface of film A' having the optical properties of the obscuration area at least in part with a coating having different optical properties as the obscuration area.
